# EUROPEAN PATENT APPLICATION

(11) **EP 4 513 709 A1**
(43) Date of publication of application: **26.02.2025**
(21) Application number: 24156003.6
(22) Date of filing: 06.02.2024
(51) Int. Cl.: H02J 7/00

(54) **BATTERY PACK**

(30) Priority: 21.08.2023 KR 20230109135
(71) Applicant: Samsung SDI Co., Ltd., Yongin-si, Gyeonggi-do 17084 (KR)
(72) Inventor: HAN, Kyuyul, Yongin-si 17084 (KR)
(74) Representative: Marks & Clerk LLP

(57) **Abstract**

A battery pack may include a battery module including a plurality of cells electrically connected to each other between a _high voltage terminal and a _low voltage terminal; a main switch connected to the high voltage terminal or the low voltage terminal, and having a control terminal connected to a first terminal of at least one first cell among the plurality of cells; and a switch control device for controlling the connection between the first terminal of the first cell and the control terminal of the main switch.

## Description

### BACKGROUND

### 1. Field

This disclosure relates to a battery pack.

### 2. Description of the Related Art

In a battery pack, a main relay may control the electrical connection between the battery pack and an external device (e.g., load, charger) using a predetermined electrical signal.

In many cases, the main relay is damaged due to overcurrent (surge current) occurring at the beginning of operation when the battery pack and the external device are connected. To prevent this, a pre-charge circuit may be connected in parallel with the main relay.

The pre-charge circuit may include a pre-charge relay and a resistor. The pre-charge relay may turn on before the main relay turns on and turn off after a predetermined time after the main relay turns on, thereby reducing the surge current that occurs when connecting the battery pack and an external device (for example, at the beginning of operation for charging or discharging). On the other hand, the cost of the battery pack increases due to the addition of the pre-charge circuit.

### SUMMARY

Embodiments are directed, in a first aspect, to a battery pack, including a battery module having a plurality of cells that may be electrically connected to each other between a high voltage terminal and a low voltage terminal; a main switch that may be connected to the high voltage terminal or the low voltage terminal, and that may have a control terminal connected to a first terminal of at least one first cell among the plurality of cells; and a switch control device for controlling the connection between the first terminal of the at least one first cell and the control terminal of the main switch.

The plurality of cells may be connected in series between the high voltage terminal and the low voltage terminal.

The main switch is connected between the battery module and the relevant one of the high voltage terminal and the low voltage terminal to which the main switch is connected. The main switch includes a first terminal that is connected to a second terminal of the at least one first cell among the plurality of cells, where the first terminal of the at least one first cell differs from the second terminal of the at least one first cell.

The switch control device may be connected between the first terminal of the at least one first cell and the control terminal of the main switch. The switch control device may control the connection between the first terminal and the control terminal by a switch between the first terminal least one first cell and the control terminal.

The battery pack may further comprise a capacitor arranged between the high voltage terminal and the low voltage terminal. The main switch is connected between one of the terminals of the capacitor and the battery module.

In an embodiment, the main switch may be connected to the low voltage terminal, and the first terminal of the first cell may be a positive terminal of a cell directly connected to the low voltage terminal. In an implementation, the main switch may include an N-channel transistor.

In the battery pack of the first aspect, the main switch may be connected to the high voltage terminal, and the first terminal of the first cell may be the negative terminal of a cell directly connected to the high voltage terminal. In an implementation, the main switch may include a P-channel transistor.

In the battery pack of the first aspect, the switch control device may include a first switch connected between the first terminal of the first cell and the control terminal of the main switch, and may be turned on or off in response to a first control signal; and at least one first resistor connected to at least one of between the first terminal of the first cell and the first switch and between the first switch and the control terminal of the main switch. In an implementation, the switch control device may further include a second switch connected between a first terminal of a second cell different from the first cell and the first switch, and may be turned on or off in response to a second control signal; and a second resistor connected between the second switch and the first switch, and the first switch may be turned on during a first period, and the second switch may be turned on after the first period. In an implementation, the second cell may be connected in series with the first cell with at least one cell interposed therebetween. In an implementation, the switch control device may further include a control voltage generator connected to the first switch and may apply a control voltage greater than the voltage of the first cell, the first switch may be turned on during a first period, and the control voltage may be applied after the first period.

In the battery pack of the first aspect, the voltage of the first cell may correspond to the turn-on voltage of the main switch.

Embodiments are also directed, in a second aspect, to a battery pack, including a battery module that may have a plurality of cells electrically connected to each other between a high voltage terminal and a low voltage terminal; a first main switch that may be connected to one of the high voltage terminal and the low voltage terminal, and that may have a control terminal connected to a first terminal of a first cell among the plurality of cells; and a switch control device that may include a first switch connected between a first terminal of the first cell and a control terminal of the first main switch, and that may turn the first switch on or off according to a first control signal.

In an implementation of the battery pack of the second aspect, the first main switch may be connected to the low voltage terminal, and the first terminal of the first cell may be a positive terminal of a cell directly connected to the low voltage terminal.

In another implementation of the battery pack of the second aspect, the first main switch of the battery pack of the second aspect may be connected to the high voltage terminal, and the first terminal of the first cell may be a negative terminal of a cell directly connected to the high voltage terminal.

In another implementation of the battery pack of the second aspect, the battery pack may further include a second main switch that may be connected to the other terminal of the high voltage terminal and the low voltage terminal, and may have a control terminal connected to a first terminal of a second cell of the plurality of cells. If the first main switch is connected to the high voltage terminal, the other terminal is the low voltage terminal, whereas, if the first main switch is connected to the low voltage terminal, the other terminal is the high voltage terminal. In an implementation, the first main switch may be connected to the high voltage terminal, the second main switch may be connected to the low voltage terminal, the first terminal of the first cell may be a negative terminal of a cell directly connected to the high voltage terminal, and the first terminal of the second cell may be a positive terminal of a cell directly connected to the low voltage terminal.

In yet another implementation, the switch control circuit of the battery pack of the second aspect may further include a second switch that may be connected between the first switch and a first terminal of a third cell among the plurality of cells, and turning the second switch on or off may be according to a second control signal, and the third cell may be connected in series with the first cell with at least one cell interposed therebetween. In addition, the switch control circuit may turn on the first switch during a first period and may turn on the second switch after the first period.

In another implementation, the switch control device of the battery pack of the second aspect may further include a control voltage generator that may be connected to the first switch for applying a control voltage, the first switch may be turned on during a first period, and the control voltage may be applied after the first period. The control voltage generator may apply the control voltage to the first switch such that, when the first switch is turned on, the control voltage is supplied to the control terminal of the main switch.

At least some of the above and other features of the invention are set out in the claims.

### BRIEF DESCRIPTION OF THE DRAWINGS

Features will become apparent to those of skill in the art by describing in detail example embodiments with reference to the attached drawings, in which:
FIG. 1 is a schematic circuit diagram showing a conventional battery pack including a pre-charge circuit;
FIG. 2 is a schematic circuit diagram showing a battery pack according to an embodiment;
FIG. 3 is a schematic circuit diagram showing a battery pack according to another embodiment;
FIG. 4 is a schematic circuit diagram showing a battery pack according to another embodiment; and
FIG. 5 is a schematic circuit diagram showing a battery pack according to another embodiment.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

Throughout the specification and claims, if a part is referred to "include" a certain element, it may mean that it may further include other elements rather than exclude other elements, unless specifically indicated otherwise.

In addition, expressions described in the singular may be interpreted in the singular or plural unless explicit expressions such as "one" or "single" are used.

In addition, terms including an ordinal number, such as first, second, etc., may be used to describe various elements, but the elements are not limited by the terms. The above terms are used only for the purpose of distinguishing one element from another element. For example, without departing from the scope of the present disclosure, a first element may be referred to as a second element, and similarly, a second element may be referred to as a first element.

Furthermore, if a component is referred to be "connected" with another component, it includes not only the case where two components are "directly connected" but also the case where two components are "indirectly or non-contactedly connected" with another component interposed therebetween, or the case where two components are "electrically connected."

On the other hand, if an element is referred to as "directly connected" to another element, it should be understood that no other element exists in the middle.

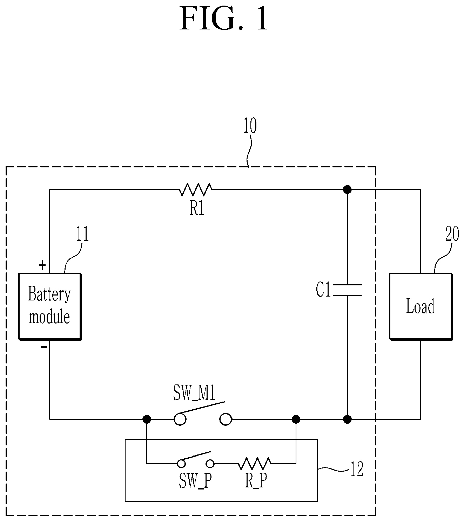

FIG. 1 is a schematic circuit diagram showing a conventional battery pack, including a pre-charge circuit.

Referring to FIG. 1, the battery pack 10 may include a battery module 11, a main switch SW_M1, a pre-charge circuit 12, and a capacitor C1.

The battery module 11 may be connected to a load 20 through the main switch SW_M1. The load 20 may include, for example, an inverter, converter, charging device, etc. The battery module 11 may be charged by a charging device or discharged by an inverter or converter.

The moment the battery module 11 and the load 20 are connected through the main switch SW_M1, an inrush current and spark are generated due to the potential difference between an internal capacitor of the load 20 and the battery module 11, which causes a situation where the main switch SW_M1 may be fused or damaged.

To prevent this, the pre-charge circuit 12 may be provided. The pre-charge circuit 12 may be connected in parallel with the main switch SW_M1, and may reduce the potential difference between the battery module 11 and the load 20 before connecting the battery module 11 and the load 20 through the main switch SW_M1.

The pre-charge circuit 12 may include a pre-charge switch SW_P and a resistor R_P. The pre-charge switch SW_P and resistor R_P may be connected in series. Before turning on the main switch SW_M1, the pre-charge switch SW_P may be turned on to charge the capacitor C1 through the pre-charge resistor R_P. Then, the voltage of the capacitor C1 may become almost the same as the voltage of the battery module 11. Next, the pre-charge switch SW_P may be turned off and the main switch SW_M1 may be turned on to use the load 20 or charge the battery module 11. At this time, the main switch SW_M1 may be turned on and no inrush current is generated due to the voltage charged in the capacitor C1. Therefore, it is possible to prevent sparks or damage to the main switch SW_M1, due to inrush current.

The main switch SW_M1 and the pre-charge switch SW_P may be controlled by a switch control device (not shown in FIG. 1). The switch control device may be, for example, a battery management system.

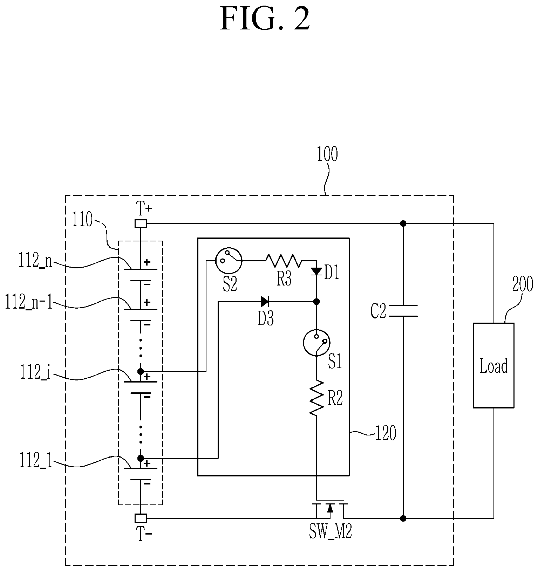

The battery pack according to embodiments of the invention may reduce the inrush current that occurs when the battery pack 10 and the load 20 are connected (for example, at the beginning of operation for charging or discharging) even without a pre-charge circuit 12. These embodiments will be described in detail with reference to FIGS. 2 to 4.

FIG. 2 is a schematic circuit diagram showing a battery pack according to one embodiment.

Referring to FIG. 2, the battery pack 100 may include at least one battery module 110, a main switch SW_M2, a switch control device 120, and a capacitor C2.

The battery module 110 may be connected to a load 200 through a high voltage terminal T+ and a low voltage terminal T- (low, relative to the high voltage terminal). The battery module 110 may include a plurality of cells 112_1 to 112_n connected in series between the high voltage terminal T+ and the low voltage terminal T-. Here, n and i may be positive integers, and n may be a number greater than i.

Each cell 112_1 to 112_n may include a positive terminal + and a negative terminal -, and the plurality of cells 112_1 to 112_n may be stacked in such a way that the positive terminal + of each cell 112_1 to 112_n-1 is coupled to the negative terminal - of each adjacent cell 112_2 to 112_n.

The capacitor C2 may be connected between the battery module 110 and the load 200, and one end of the capacitor C2 may be connected to the high voltage terminal T+ of the battery module 110, and the other end of the capacitor C2 may be connected to the low voltage terminal T- of the battery module 110.

The main switch SW_M2 may be connected between the low voltage terminal T- of the battery module 110 and the other terminal of the capacitor C2. The main switch SW_M2 may be turned on or off based on the control of the switch control device 120 and may control the electrical connection between the battery module 110 and the load 200.

The main switch SW_M2 may be a relay or contactor.

The main switch SW_M2 may be implemented with a field effect transistor (FET).

The main switch SW_M2 may have a first terminal, a second terminal, and a control terminal. If the main switch SW_M2 is an N-channel FET, for example, the first terminal may be a source terminal, the second terminal may be a drain terminal, and the control terminal may be a gate terminal. In Figure 2, the main switch SW_M2 is shown as an N-channel FET.

The first terminal of the main switch SW_M2 (on the left) may be connected to the low voltage terminal T- of the battery module 110, and the second terminal of the main switch SW_M2 (on the right) may be connected to the other (closest) terminal of the capacitor C2. The control terminal (the L-shaped portion above) of the main switch SW_M2 may be connected to the positive terminal + of one cell 112_1 in the battery module 110. In an embodiment, one cell 112_1 may be a cell directly connected to the low voltage terminal T- of the battery module 110. Additionally, the control terminal of the main switch SW_M2 may be connected to the cell 112_i. For example, cell 112_i may be the 4-th or 5-th cell.

The switch control device 120 may control turn on or turn off of the main switch SW_M2.

According to the embodiment, the switch control device 120 may use the voltage of the one cell 112_1 as the turn-on voltage of the main switch SW_M2 for pre-charge, that is, as the turn-on voltage to slowly turn on the main switch SW_M2. After pre-charge, the switch control device 120 may use the voltage of several cells 112_1 to 112_i as a turn-on voltage to completely turn on the main switch SW_M2.

The switch control device 120 may include a switch S1, a resistor R2, a switch S2, a resistor R3, and diodes D1 and D3. The switch S1 may be connected between the positive terminal + of the cell 112_1 and the control terminal of the main switch SW_M2. One end of the switch S1 may be connected to the positive terminal + of the cell 112_1, and the other end of the switch S1 may be connected to the control terminal of the main switch SW_M2. The resistor R2 may be connected between the switch S1 and the control terminal of the main switch SW_M2. Furthermore, a resistor may be connected between the positive terminal + of the cell 112_1 and the switch S1. The switch S2 may be connected between the positive terminal + of the cell 112_i and the control terminal of the main switch SW_M2. One end of the switch S2 may be connected to the positive terminal + of the cell 112_i. The resistor R3 may be connected between the other end of switch S2 and the control terminal of main switch SW_M2. The diode D1 may be connected between the resistor R3 and the control terminal of the main switch SW_M2. An anode of the diode D1 may be connected to the resistor R3, and a cathode of the diode D1 may be connected to one end of the switch S1. The diode D3 may be connected between the positive terminal + of the cell 112_1 and the other end of the switch S2. An anode of the diode D3 may be connected to the positive terminal + of the cell 112_1, and a cathode of the diode D3 may be connected to the other end of the switch S2. The diode D3 may prevent a current path from being generated on a current path in parallel with the battery module 110 by applying the voltage of the cell 1 12_i to the cell 112_1 if the switch S2 is turned on.

The switch control device 120 may perform a pre-charge operation by turning on the switch S1 according to a switch control signal applied from the outside and connecting the positive terminal+ of the cell 112_1 and the control terminal of the main switch SW_M2. The switch S1 is configured to receive the switch control signal and turn on in response to the switch control signal.

If the positive terminal + of the cell 112_1 and the control terminal of the main switch SW_M2 are connected, the voltage of the cell 112_1 may be applied to the control terminal of the main switch SW_M2 and the main switch SW_M2 may be slowly turned on and, as a result, it may have a high resistance value.

The voltage of one cell 112_1 may be 3.4V to 4.2V. For example, one cell 112_1 may have 4.2V if fully charged (State of Charge or SOC=100%) and 3.4V if discharged (SOC=0%). Within the range of SOC 0% to SOC 100%, the voltage of one cell 112_1 may be similar to the turn-on voltage of the main switch SW_M2. The turn-on voltage of the main switch SW_M2 may be the threshold voltage of the main switch SW_M2. Generally, the turn-on voltage of a transistor may be around 3.5V to 4 V. Accordingly, the voltage of one cell 112_1 may be used as the turn-on voltage of the main switch SW_M2.

The degree to which the main switch SW_M2 is turned on may be determined depending on the magnitude of the voltage input to the control terminal. If a high voltage is applied to the control terminal of the main switch SW_M2, the main switch SW_M2 is sufficiently turned on and may have a low resistance value. On the other hand, if a voltage that is not significantly different from the turn-on voltage of the main switch SW_M2 is applied to the control terminal of the main switch SW_M2, the main switch SW_M2 may be turned on weakly and may have a high resistance value. The high resistance value may be referred to as a first resistance value, and the low resistance value may be referred to as a second resistance value. The first resistance value is higher than the second resistance value. The voltage, e.g. from cell 112_1, that causes the switch SW_M2 to have the first resistance value has a lower magnitude than the voltage, e.g. from cell 112 _i, that causes the switch SW_M2 to have the second resistance value.

As in the embodiment, if the voltage of one cell 112_1 similar to the turn-on voltage of the main switch SW_M2, is applied to the control terminal of the main switch SW_M2, the main switch SW_M2 may be slowly turned on, and may have a high resistance value. This may perform the same role as the pre-charge resistor R_P in the pre-charge circuit 12 shown in FIG. 1. Therefore, even without the pre-charge circuit 12 shown in FIG. 1, the surge current that occurs if the battery pack 100 and the load 200 are connected (for example, at the beginning of driving for charging or discharging) may be reduced.

Meanwhile, the voltage of one cell 112_1 may be used as the turn-on voltage of the main switch SW_M2 for the pre-charge operation, but the voltage is not limited to this. Depending on the capacity of one cell 112, the voltage of two or more cells 112 may be used as the turn-on voltage of the main switch SW_M2 for the pre-charge operation.

After the pre-charge operation, the switch control device 120 may turn on the switch S2 while the switch S1 is on. As a result, the positive terminal + of the cell 112_i and the control terminal of the main switch SW_M2 may be connected. For example, if i = 5 and the voltage of one cell is 3.4V to 4.2V, a high voltage of about 17V to about_21V may be applied to the control terminal of the main switch SW_M2. If the voltage stacked from the cell 112_1 to the cell 112_i is applied to the control terminal of the main switch SW_M2, the main switch SW_M2 may be sufficiently turned on and may have a low resistance value. Therefore, after completion of pre-charge, energy may be transferred between the battery module 110 and the load 200 without loss.

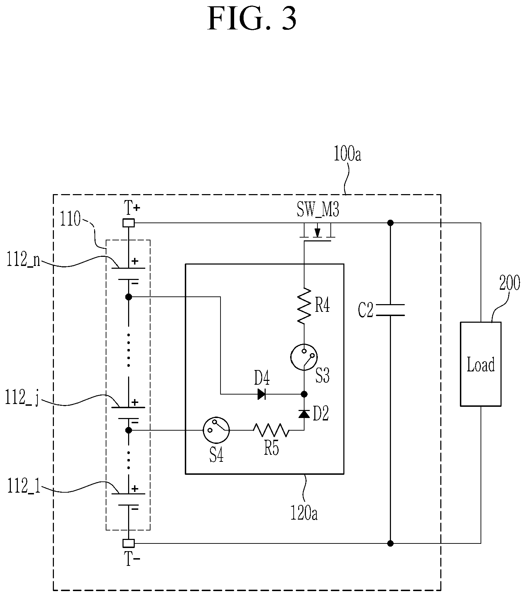

FIG. 3 is a diagram showing a battery pack according to another embodiment.

Referring to FIG. 3, unlike FIG. 2, the main switch SW_M3 of the battery pack 100a may be connected between the high voltage terminal T+ of the battery module 110 and the one end of the capacitor C2.

Specifically, the first terminal of the main switch SW_M3 (on the left) may be connected to the high voltage terminal T+ of the battery module 110, and the second terminal of the main switch SW_M3 (on the right) may be connected to the one end of the capacitor C2. The control terminal of the main switch SW_M3, shown connected to resistor R4, may be connected to the negative terminal - of the cell 112_n. The cell 112_n may be directly connected to the high voltage terminal T+ of the battery module 110. In order to turn on the main switch SW_M3, in which the control terminal is connected to the negative terminal - of the cell 112_n, a P-channel transistor may be used as the main switch SW_M3. Additionally, the control terminal of the main switch SW_M3 may be connected to the negative terminal - of the cell 112_j.

The switch control device 120a may include a switch S3, a resistor R4, a switch S4, a resistor R5, and diodes D2 and D4. The switch S3 may be connected between the negative terminal - of the cell 112_n and the control terminal of the main switch SW_M3. One end of the switch S3 may be connected to the negative terminal - of the cell 112_n, and the other end of the switch S3 may be connected to the control terminal of the main switch SW_M3. The resistor R4 may be connected between the switch S3 and the control terminal of the main switch SW_M3. The switch S4 may be connected between the negative terminal - of the cell 112j and the control terminal of the main switch SW_M3. One end of the switch S4 may be connected to the negative terminal - of the cell 112_j. The resistor R5 may be connected between the other end of switch S4 and the control terminal of main switch SW_M3. The diode D2 may be connected between the resistor R5 and the control terminal of the main switch SW_M3. An anode of the diode D2 may be connected to the resistor R5, and a cathode of the diode D2 may be connected to the one end of the switch S3. The diode D4 may be connected between the negative terminal - of the cell 112_n and the one end of the switch S3. An anode of the diode D4 may be connected to the negative terminal - of the cell 112_n, and a cathode of the diode D4 may be connected to the one end of the switch S3. The diode D4 can prevent the current path of the battery pack from being generated in parallel with the battery module 110 if the switch S4 is turned on.

The switch control device 120a may perform a pre-charge operation by turning on the switch S3 according to a switch control signal applied from the outside and connecting the negative terminal - of the cell 112_n and the control terminal of the main switch SW_M3.

If the negative terminal - of the cell 112_n and the control terminal of the main switch SW_M3 are connected, the voltage of the negative terminal - of the cell 112_n may be applied to the control terminal of the main switch SW_M3. The main switch SW_M3 may be slowly turned on with a high resistance value. This may perform the same role as the pre-charge resistor R_P in the pre-charge circuit 12 shown in FIG. 1. Therefore, even without the pre-charge circuit 12 shown in FIG. 1, the surge current that occurs if the battery pack 100 and the load 200 are connected (for example, at the beginning of driving for charging or discharging) may be reduced.

After the pre-charge operation, the switch control device 120a may turn on the switch S4 while the switch S3 is turned on. As a result, the negative terminal - of the cell 112_j and the control terminal of the main switch SW_M3 may be connected. For example, j may be equal to n-4. If the negative voltage stacked between the cells 112_n and 112_j is applied to the control terminal of the main switch SW_M3, the main switch SW_M3 may be sufficiently turned on with a low resistance value. Therefore, after completion of pre-charge, energy may be transferred between the battery module 110 and the load 200 without loss.

Meanwhile, in an embodiment, the first terminal of the main switch SW_M3 may be connected to the negative terminal - of the cell 112_j, and the second terminal of the main switch SW_M3 may be connected to the one end of the capacitor C2. In this embodiment, control terminal of the main switch SW_M3 may be connected to the positive terminal + of the cell 112j. In addition, the control terminal of the main switch SW_M3 may be connected to the high voltage terminal T+ of the battery module 110, that is, the positive terminal + of the cell 112_n, which is directly connected to the high voltage terminal T+ of the battery module 110. In this case, the main switch SW_M3 may be an N-channel transistor. Even in this case, the switch control device 120a may turn on the switch S3 to perform a pre-charge operation, and turn on the switch S4 while the switch S3 is turned on after the pre-charge is completed. Even if the main switch SW_M3 is connected in this way, the main switch SW_M3 may be slowly turned on during the pre-charge operation, as a result, it may have a high resistance value. Thus, even without the pre-charge circuit 12 shown in FIG. 1, the surge current that occurs if the battery pack 100 and the load 200 are connected (for example, at the beginning of driving for charging or discharging) may be reduced.

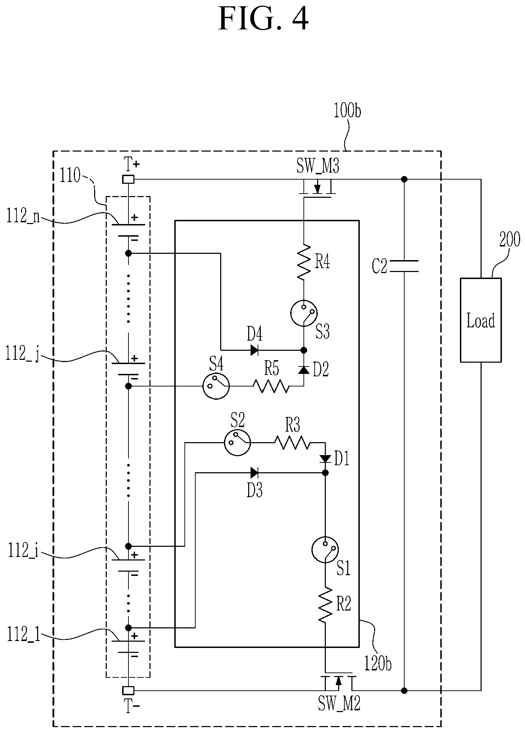

FIG. 4 is a diagram showing a battery pack according to another embodiment.

Referring to FIG. 4, unlike FIGS. 2 and 3, the battery pack 100b may include main switches SW_M2 and SW_M3. The main switch SW_M2 may be connected between the low voltage terminal T- of the battery module 110 and the other (closest) end of the capacitor C2. The main switch SW_M3 may be connected between the high voltage terminal T+ of the battery module 110 and the one (closest) end of the capacitor C2.

The switch control device 120b may perform a pre-charge operation by turning on the switches S1 and S3 according to a switch control signal applied from the outside and slowly turning on the main switches SW_M2 and SW_M3. By doing this, the main switches SW_M2 and SW_M3 have high resistance values, and may perform the same role as the pre-charge resistor R_P in the pre-charge circuit 12 shown in FIG. 1. Therefore, even without the pre-charge circuit 12 shown in FIG. 1, the surge current that occurs if the battery pack 100 and the load 200 are connected (for example, at the beginning of driving for charging or discharging) may be reduced.

Next, after the pre-charge is completed, the switch control device 120b may turn on the switches S2 and S3 while the switches S1 and S3 are turned on so that the main switches SW_M2 and SW_M3 are completely turned on.

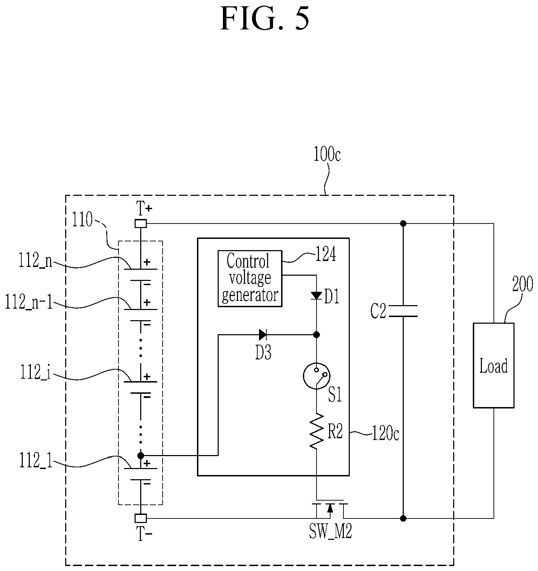

FIG. 5 is a diagram showing a battery pack according to another embodiment.

Referring to FIG. 5, in the switch control device 120c of the battery pack 100c, the positive terminal + of the cell 112_i may be not connected to the main switch SW_M2, as shown in FIG. 2. Instead, the switch control device 120c may apply a control voltage to the control terminal of the main switch SW_M2 after completion of pre-charge. This control voltage may be set to a high voltage that may completely turn on the main switch SW_M2. Pre-charging may be accomplished by, for example, turning on switch S1 via an outside signal, the switch S1 connects the positive + terminal of cell 112_1 to the control terminal of main switch SW_M2.

The switch control device 120c may include a control voltage generator 124 that generates a control voltage. The embodiment shown in FIG. 5 may also be applied to FIGS. 3 and 4. According to at least one of the embodiments, a pre-charge effect can be provided even without a pre-charge circuit. Accordingly, an inrush current that occurs when connecting the battery pack to an external device without the pre-charge circuit can be reduced. For example, an inrush current that occurs at the beginning of driving for charging or discharging can be reduced.

One or more embodiments may provide a battery pack that can reduce surge current that occurs when the battery pack is connected to an external device without a pre-charge circuit.

According to one or more embodiments, a battery pack may be provided. The battery pack includes a battery module including a plurality of cells electrically connected to each other between a high voltage terminal and a low voltage terminal; a main switch connected to the high voltage terminal or the low voltage terminal, and having a control terminal connected to a first terminal of at least one first cell among the plurality of cells; and a switch control device for controlling the connection between the first terminal of the first cell and the control terminal of the main switch.

The main switch may be connected to the low voltage terminal, and the first terminal of the first cell may be a positive terminal of a cell directly connected to the low voltage terminal.

The main switch may include an N-channel transistor.

The main switch may be connected to the high voltage terminal, and the first terminal of the first cell may be the negative terminal of a cell directly connected to the high voltage terminal.

The main switch may include a P-channel transistor.

The switch control device may include: a first switch connected between the first terminal of the first cell and the control terminal of the main switch, and turned on or off in response to a first control signal; and at least one first resistor connected to at least one of between the first terminal of the first cell and the first switch and between the first switch and the control terminal of the main switch.

The switch control device may further include: a second switch connected between a first terminal of a second cell different from the first cell and the first switch, and turned on or off in response to a second control signal; and a second resistor connected between the second switch and the first switch, and the first switch may be turned on during a first period, and the second switch is turned on after the first period.

The second cell may be connected in series with the first cell with at least one cell interposed therebetween.

The switch control device may further include a control voltage generator connected to the first switch and applying a control voltage greater than the voltage of the first cell, and the first switch may be turned on during a first period and the control voltage is applied after the first period.

The voltage of the first cell may correspond to the turn-on voltage of the main switch.

According to one or more other embodiments, a battery pack may be provided. The battery pack includes: a battery module including a plurality of cells electrically connected to each other between a high voltage terminal and a low voltage terminal; a first main switch connected to one of the high voltage terminal and the low voltage terminal, and having a control terminal connected to a first terminal of a first cell among the plurality of cells; and a switch control device comprising a first switch connected between a first terminal of the first cell and a control terminal of the first main switch, and turning the first switch on or off according to a first control signal.

The first main switch may be connected to the low voltage terminal, and the first terminal of the first cell may be a positive terminal of a cell directly connected to the low voltage terminal.

The first main switch may be connected to the high voltage terminal, and the first terminal of the first cell may be a negative terminal of a cell directly connected to the high voltage terminal.

The battery pack may further include a second main switch connected to the other terminal of the high voltage terminal and the low voltage terminal, and having a control terminal connected to a first terminal of a second cell of the plurality of cells.

The first main switch may be connected to the high voltage terminal, the second main switch may be connected to the low voltage terminal, and the first terminal of the first cell may be a negative terminal of a cell directly connected to the high voltage terminal, and the first terminal of the second cell may be a positive terminal of a cell directly connected to the low voltage terminal.

The switch control circuit may further include a second switch connected between the first switch and a first terminal of a third cell among the plurality of cells, and may turn the second switch on or off according to a second control signal, and the third cell may be connected in series with the first cell with at least one cell interposed therebetween.

The switch control circuit may turn on the first switch during a first period and turns on the second switch after the first period.

The switch control device may further include a control voltage generator may be connected to the first switch and for applying a control voltage, and the first switch may be turned on during a first period and the control voltage may be applied on after the first period.

According to at least one of the embodiments, a pre-charge effect can be provided even without a pre-charge circuit. Accordingly, an inrush current that occurs when connecting the battery pack to an external device without the pre-charge circuit can be reduced. For example, an inrush current that occurs at the beginning of driving for charging or discharging can be reduced.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

### ANNEX A

The present invention can also be defined by reference to the following clauses:
Clause 1. A battery pack, comprising:
   a battery module including a plurality of cells electrically connected to each other between a high voltage terminal and a low voltage terminal;
   a main switch connected to the high voltage terminal or the low voltage terminal, and having a control terminal connected to a first terminal of at least one first cell among the plurality of cells; and
   a switch control device for controlling the connection between the first terminal of the at least one first cell and the control terminal of the main switch.
Clause 2. The battery pack according to clause 1, wherein the main switch is connected to the low voltage terminal, and wherein the first terminal of the first cell is a positive terminal of a cell directly connected to the low voltage terminal.
Clause 3. The battery pack according to clause 2, wherein the main switch includes an N-channel transistor.
Clause 4. The battery pack according to clause 1, wherein the main switch is connected to the high voltage terminal, and wherein the first terminal of the first cell is the negative terminal of a cell directly connected to the high voltage terminal.
Clause 5. The battery pack according to clause 4, wherein the main switch includes a P-channel transistor.
Clause 6. The battery pack according to any of clauses 1 to 5, wherein the switch control device comprises:
   a first switch connected between the first terminal of the first cell and the control terminal of the main switch, and turned on or off in response to a first control signal; and
   at least one first resistor connected to at least one of between the first terminal of the first cell and the first switch and between the first switch and the control terminal of the main switch.
Clause 7. The battery pack according to clause 6, wherein the switch control device further comprises:
   a second switch connected between a first terminal of a second cell different from the first cell and the first switch, and turned on or off in response to a second control signal; and
   a second resistor connected between the second switch and the first switch, and
   the first switch is turned on during a first period, and the second switch is turned on after the first period.
Clause 8. The battery pack according to clause 7, wherein the second cell is connected in series with the first cell with at least one cell interposed therebetween.
Clause 9. The battery pack according to any of clauses 6 to 8, wherein the switch control device further comprises:
   a control voltage generator connected to the first switch and applying a control voltage greater than the voltage of the first cell, and
   the first switch is turned on during a first period and the control voltage is applied after the first period.
Clause 10. The battery pack according to any of clauses 1 to 9, wherein the voltage of the first cell corresponds to the turn-on voltage of the main switch.
Clause 11. A battery pack, comprising:
   a battery module including a plurality of cells electrically connected to each other between a high voltage terminal and a low voltage terminal;
   a first main switch connected to one of the high voltage terminal and the low voltage terminal, and having a control terminal connected to a first terminal of a first cell among the plurality of cells; and
   a switch control device comprising a first switch connected between a first terminal of the first cell and a control terminal of the first main switch, and turning the first switch on or off according to a first control signal.
Clause 12. The battery pack according to clause 11, wherein:
   the first main switch is connected to the low voltage terminal, and
   the first terminal of the first cell is a positive terminal of a cell directly connected to the low voltage terminal.
Clause 13. The battery pack according to clause 11, wherein:
   the first main switch is connected to the high voltage terminal, and
   the first terminal of the first cell is a negative terminal of a cell directly connected to the high voltage terminal.
Clause 14. The battery pack according to any of clauses 11 to 13, further comprising a second main switch connected to the other terminal of the high voltage terminal and the low voltage terminal, and having a control terminal connected to a first terminal of a second cell of the plurality of cells.
Clause 15. The battery pack according to clause 14, wherein the first main switch is connected to the high voltage terminal, the second main switch is connected to the low voltage terminal, the first terminal of the first cell is a negative terminal of a cell directly connected to the high voltage terminal, and the first terminal of the second cell is a positive terminal of a cell directly connected to the low voltage terminal.
Clause 16. The battery pack according to any of clauses 11 to 15, wherein:
   the switch control circuit further comprises a second switch connected between the first switch and a first terminal of a third cell among the plurality of cells,
   turning the second switch on or off is according to a second control signal, and
   the third cell is connected in series with the first cell with at least one cell interposed therebetween.
Clause 17. The battery pack according to clause 16, wherein the switch control circuit turns on the first switch during a first period and turns on the second switch after the first period.
Clause 18. The battery pack according to any of clauses 11 to 17, wherein the switch control device further comprises:
   a control voltage generator connected to the first switch and for applying a control voltage, wherein
   the first switch is turned on during a first period and the control voltage is applied after the first period.

## Claims

1. A battery pack, comprising:
a battery module including a plurality of cells electrically connected to each other between a high voltage terminal and a low voltage terminal;
a main switch connected to the high voltage terminal or the low voltage terminal, and having a control terminal connected to a first terminal of at least one first cell among the plurality of cells; and
a switch control device configured to control the connection between the first terminal of the at least one first cell and the control terminal of the main switch.

2. The battery pack as claimed in claim 1, wherein the main switch is connected to the low voltage terminal, and wherein the first terminal of the at least one first cell is a positive terminal of the at least one first cell, the at least one first cell being directly connected to the low voltage terminal,
wherein, optionally, the main switch includes an N-channel transistor.

3. The battery pack as claimed in claim 1, wherein the main switch is connected to the high voltage terminal, and wherein the first terminal of the at least one first cell is the negative terminal of a cell, the cell being directly connected to the high voltage terminal,
wherein, optionally, the main switch includes a P-channel transistor.

4. The battery pack as claimed in any preceding claim, wherein the switch control device comprises:
a first switch connected between the first terminal of the at least one first cell and the control terminal of the main switch, wherein the first switch is configured to receive a first control signal and be turned on or off in response to the first control signal; and
at least one first resistor connected to at least one of between the first terminal of the at least one first cell and the first switch and between the first switch and the control terminal of the main switch.

5. The battery pack as claimed in claim 4, wherein the switch control device further comprises:
a second switch connected between a first terminal of a second cell different from the at least one first cell and the first switch, wherein the second switch is configured to receive a second control signal and be turned on or off in response to the second control signal; and
a second resistor connected between the second switch and the first switch; and
control circuity configured to turn the first switch on during a first period and turn the second switch on after the first period.

6. The battery pack as claimed in claim 5, wherein the second cell is connected in series with the at least one first cell with at least one cell interposed therebetween.

7. The battery pack as claimed in any of claims 4 to 6, wherein the switch control device further comprises:
a control voltage generator connected to the first switch and configured to apply to the first switch after the first period, a control voltage greater than the voltage of the at least one first cell; and
control circuity configured to turn the first switch on during the first period.

8. The battery pack as claimed in any preceding claim, wherein the voltage of the at least one first cell corresponds to the turn-on voltage of the main switch.

9. The battery pack as claimed in claim 1,
wherein the switch control device comprises a first switch connected between the first terminal of the at least one first cell and the control terminal of the main switch, wherein the first switch is configured to receive a first control signal and be turned on or off according to the first control signal.

10. The battery pack as claimed in claim 9, wherein the main switch is connected to the low voltage terminal or to the high voltage terminal,
wherein if the main switch is connected to the low voltage terminal, the first terminal of the at least one first cell is a positive terminal and the at least one first cell is directly connected to the low voltage terminal,
wherein if the main switch is connected to the high voltage terminal, the first terminal of the first cell is a negative terminal and the at least one first cell is directly connected to the high voltage terminal.

11. The battery pack as claimed in any of claims 9 to 10, wherein the main switch is a first main switch, the battery pack further comprising a second main switch connected to an other terminal of the high voltage terminal and the low voltage terminal, and having a control terminal connected to a first terminal of a second cell of the plurality of cells.

12. The battery pack as claimed in claim 11, wherein the first main switch is connected to the high voltage terminal, the second main switch is connected to the low voltage terminal, the first terminal of the at least one first cell is a negative terminal and the at least one first cell is directly connected to the high voltage terminal, and the first terminal of the at least one second cell is a positive terminal and the at least one second cell is directly connected to the low voltage terminal.

13. The battery pack as claimed in any of claims 9 to 12, wherein:
the switch control device further comprises a second switch connected between the first switch and a first terminal of a third cell among the plurality of cells,
wherein the second switch is configured to receive a second control signal and be turned on or off according to the second control signal, and
the third cell is connected in series with the at least one first cell with at least one further cell interposed therebetween.

14. The battery pack as claimed in claim 13, wherein the switch control device comprises a circuit configured to turn on the first switch during a first period and turn on the second switch after the first period.

15. The battery pack as claimed in any of claims 9 to 14, wherein the switch control device further comprises:
a control voltage generator connected to the first switch and configured to apply a control voltage to the first switch after a first period, and
the first switch configured to receive a first control signal and be turned on during the first period.
